# EUROPEAN PATENT SPECIFICATION

(11) **EP 2 557 636 B1**
(45) Date of publication and mention of the grant of the patent: **16.11.2016**
(21) Application number: 11290370.3
(22) Date of filing: 11.08.2011
(51) Int. Cl.: H01R 13/53, H02G 15/103

(54) **Corona shield for high voltage connectors**
Lichtbogenabschirmung für Hochspannungsstecker
Protection contre les arcs électriques pour connecteurs haute tension

(43) Date of publication of application: 13.02.2013
(73) Proprietor: Tyco Electronics Simel S.A.S., 21220 Gevrey-Chambertin (FR)
(72) Inventor: Royer, Laurent, 21580 Courlon (FR); Godard, Jérôme, 21910 Savouges (FR)
(74) Representative: Grünecker Patent- und Rechtsanwälte PartG mbB

(56) References cited:
- US-A- 1 972 616
- US-A- 2 789 154
- US-A- 3 046 327
- US-A- 3 527 875

## Description

### TECHNICAL FIELD OF THE INVENTION

The present invention relates to expansion connectors for electrically interconnecting equipments in high voltage applications, and more particularly, to corona shielding of expansion connectors for voltage levels above 400 kV.

### BACKGROUND OF THE INVENTION

Corona phenomenon is a luminous partial discharge from conductors and insulators due to ionization of air which occurs when the electrical field, that is, the electric potential gradient exceeds a critical value, a corona discharge threshold.

Corona may cause several damage and environmental disturbing effects, in particular with regard to power transmission equipment and installations.

For instance, corona discharge around conductors may generate corrosive materials, such as ozone and nitrogen oxides, which yield nitric acid under conditions of high humidity. These corrosive materials shorten the life span of high voltage lines and substations components. Corona processes may also cause damage to High voltage (HV) insulators, especially non-ceramic (NCI) insulators.

Corona also generates audio noise and/or Radio Interference (RI/RFI) mainly to AM transmissions, which may raise customer complaints.

Corona effects are particularly important around conductors submitted to high tensions and exhibiting sharps points or edges at the conductor surface. The potential gradients become particularly large around sharp edges, which significantly reduce the critical voltage above which a corona discharge occurs with respect to a conductor having a regular surface.

Therefore, power transmission devices and equipments for high voltage applications require protection against corona discharge effects.

For instance, US patent No. 3,527,875 describes a housing or corona shield for high voltage bus connectors which support shield against corona discharge, and permit bus expansion and contraction. The shield is consituted by mating parts, which when mated, encloses the expansion coupling element connecting the two buses. In one configuration, the corona shield has two detachable portions: an upper generally hemispherical portion and a lower cup-shaped portion. Each of the shield portions is provided with a semi-circular opening, which mate to form generally circular openings. The circular openings receive and support the buses terminating within the shield. Connected to the buses within the shield is a pair of end caps and an S-shaped shunt or expansion coupling. The expansion coupling is made of electrically conductive material and allows the buses to axially expand and contract. In another configuration, the corona shield is constituted by a hollow spherical housing formed in three parts.

High voltage installations such as switchyards commonly use flexible conductors and rigid tubular conductors for electrically interconnecting equipments such as transformers, disconnectors, circuit breakers or other electrical or power electrical device used in AC substations and DC converters.

Rigid tubular conductors offer several advantages over flexible conductors. For instance, they can be provided with large size and cross section for carrying high currents (i.e.: 4000 - 6000 Amps). Their mechanical rigidity also allows reducing electro-dynamic movements of the tube during short circuits in the switchyard.

However, rigid tubular conductors are responsive to variations of temperature caused by atmospheric conditions or the heat generated by the currents transported by the conductor, which may lead to a dilatation (or contraction) of the tube due to thermal expansion, namely, along the axial direction of the tube.

Rigid tubular conductors are then usually connected to other equipment, such as a thyristor valve or another rigid busbar, using expansion connectors.

An expansion connector transfers the electrical current received from one connected terminal, such as a busbar, to another equipment terminal, such as terminal connection of a thyristor valve, while providing an expandable interconnection that allows relative displacements between the two connected parts such as those caused by thermal expansion.

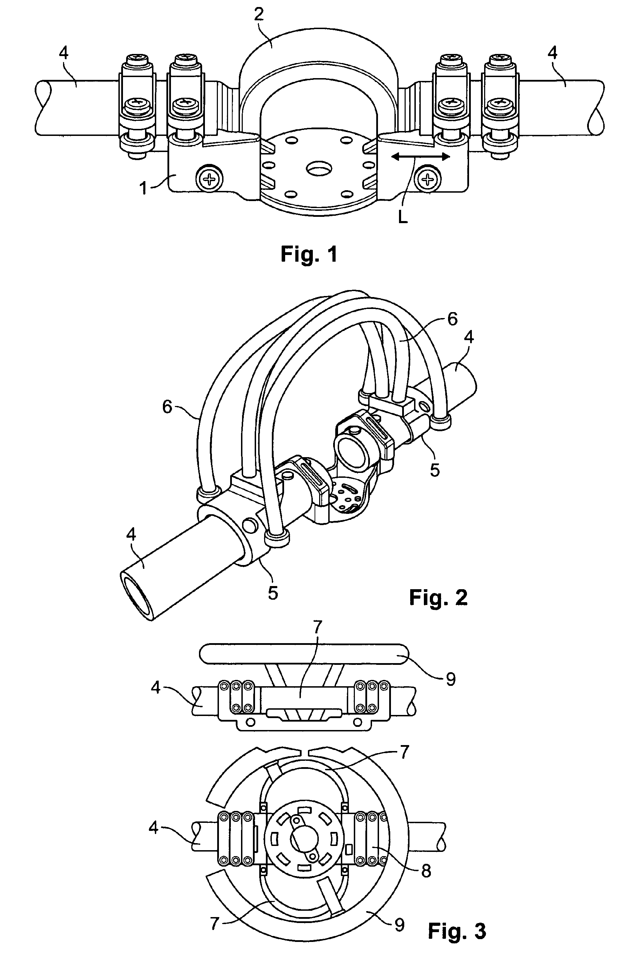

Figs. 1 and 2 illustrate two types of expansion connectors that are conventionally used in high voltage applications for connecting rigid tubular conductors to other equipment.

Fig. 1 shows a conventional expansion connector with a blade design, in which the current between the terminals 1 of the expansion connector is carried by copper or aluminium blades 2, also called "shunt". In the illustrated example, each connection terminal 1 is connected to a rigid tubular conductor 4, hereinafter referred to as rigid busbar or simply tube.

The blades 2 are normally bended and are relative flexible so as to allow a longitudinal displacement L of each connection terminal 1, for instance, caused by thermal expansion/contraction of the rigid busbar 4. The blades 2 are thin and a gap is kept between each of them in order to allow the longitudinal displacement of each tube 4.

Expansion connectors with blade design are normally used in voltage applications up to 330 kV and are relatively cheap. However, since the sharp edges of the blades 2 may give rise to corona and radio interference phenomenon at higher voltages, these connectors cannot be used for voltage levels above 330 kV.

For this reason, expansion connectors with cable design are generally used in high voltage applications above 400 kV.

This type of connectors is typically used at upper voltages because the absence of sharp edges in the cable connectors decreases the voltage gradient around the cables and therefore, corona phenomenon can only appear at voltage levels much higher than with conductors with sharp edges.

Fig. 2 shows an example of conventional expansion connector with cable design, in which the current is transported between the terminals 5 of the expansion connector by flexible, cable conductors 6. The number and size of the cables 6 are defined by the current to be carried by the expansion connector.

This type of expansion connectors has the disadvantage that it is not as compact as expansion connectors with blade design. Further, the flexible cables 6 are normally made of aluminium, which render the connector comparatively much more expensive.

Expansion connectors designed with blades are less expensive but can only be used in 400 kV (and above) applications if the corona and Radio Interference Voltage acceptance criteria of the customer are not too high.

An alternative consist in providing a corona ring for limiting and reducing the corona phenomenon, such as illustrated in Fig. 3.

Fig. 3 shows an expansion connector designed with a pair of blades 7 between the connector terminals 8 and protected by a corona ring 9. However, this solution is also quite expensive and not very compact. Further, supports for the corona ring 9 have to be provided.

Consequently, there is a need for cost-effective and compact expansion connectors suitable for high voltage applications, namely, for voltage levels of 400 kV and above.

### SUMMARY OF THE INVENTION

The present invention aims at overcoming the disadvantages and shortcomings of the prior art discussed above and an object thereof is to provide an expansion connector for high voltage applications which is cost-effective and of compact design.

This object is solved by the subject matter of the independent claims. Advantageous embodiments of the present invention are defined by the dependent claims.

According to a comparative example for understanding the present invention, it is provided a corona shield device for an expansion connector for high voltage applications, comprising a shielding part adapted to cover a flexible conducting element of the expansion connector, wherein the shielding part as a smooth external surface adapted to decrease an electric potential gradient around the flexible conducting element to a value below a corona discharge threshold.

The smooth external surface of the shielding part avoids or reduces the formation of strong potential gradients around sharp edges of the flexible conducting element, thereby, avoiding or limiting corona and radio interference effects.

According to an advantageous development, the corona shield device further comprises a flexible attachment element (or more) adapted to flexibly attach the shielding part to an attachment point of the expansion connector.

In this way, the shielding part can be flexibly moved with respect to the attachment point and therefore, reversibly follow the expansion or contraction of the expansion connector while effectively protecting the flexible conducting element against corona effects.

According to a further development, it is provided an expansion connector for high voltage applications, comprising: a first connection part adapted to connect to a first element; a second connection part adapted to connect to a second element that is movable with respect to the first element; a flexible conducting element adapted to flexibly couple the first and second connection parts along an axial direction; and a corona shield device according to the invention.

In a further embodiment, the shielding part is flexibly attached to respective attachment points of the first and second connection parts by flexible attachment elements.

Thus, by combining a corona shield device with the use of shunts on high voltage connectors, the present invention provides at least two major advantages over conventional high voltage connectors. First, the cost of this solution is cheaper than the cost of expansion connectors of aluminium cable design. Second, the expansion connector of the present invention has a more compact design so that it can be used on High Voltage DC applications where phase-to-ground distances are reduced.

The accompanying drawings are incorporated into and form a part of the specification for the purpose of explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more detailed description of the invention as illustrated in the accompanying drawings, in which:
**Fig.1** is a perspective view of a conventional expansion connector having a blade design;
**Fig. 2** is a perspective view of a conventional expansion connector having cable design;
**Fig. 3** schematically illustrates an expansion connector with a pair of blades and a corona ring when viewed from the side (upper image) and from the top of the corona ring (lower image);
**Fig. 4** schematically illustrates a perspective view of an expansion connector connected to a busbar and having an expansion corona shield according to an embodiment of the present invention;
**Fig. 5** schematically illustrates a longitudinal view (upper image) of the expansion connector and expansion corona shield shown in Fig. 4, and a bottom view (lower image) along the longitudinal axis Z and from the side of the busbar;
**Fig. 6** schematically illustrates a perspective view of the expansion connector and expansion corona shield shown in Fig. 4 when also connected to an equipment terminal;
**Fig. 7** schematically illustrates a half of an expansion corona shield with flexible attachment elements according to an embodiment of the present invention, for a given distance between attachment points A and B of the shield (left-hand image) and when the distance between the attachment points decrease (right-hand image). The regions encircled by a dashed line represent a partial cut-way view of the shield.

### DETAILED DESCRIPTION OF THE INVENTION

Advantageous embodiments of a corona shield device constituted according to the invention will now be described in further detail with reference to the accompanying drawings.

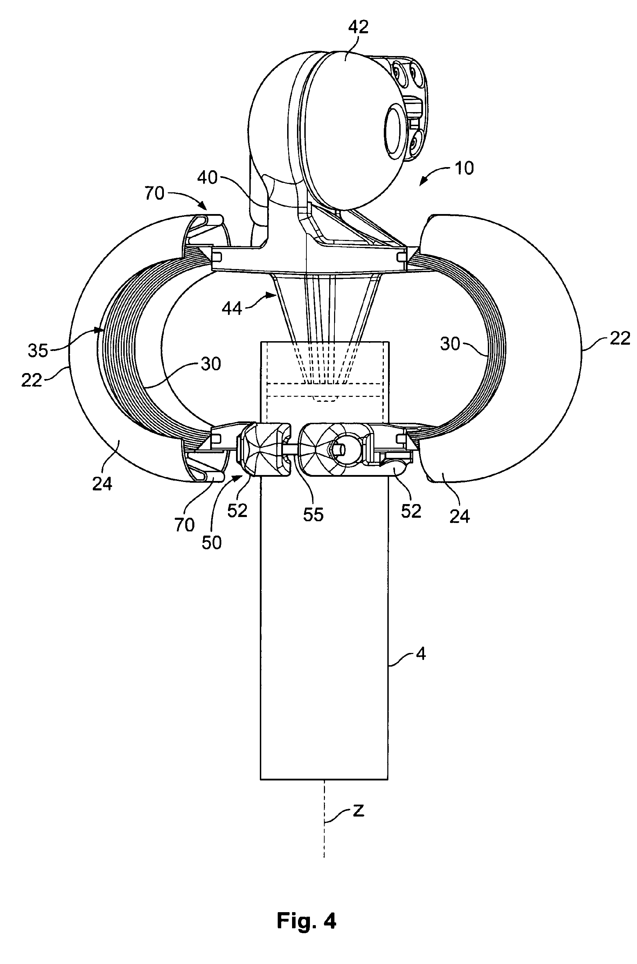

Fig. 4 shows an expansion connector device 10 of blade design and having a corona shield device 20 according to an embodiment of the present invention.

The expansion connector 10 has two flexible conducting elements (at least one), which are preferably provided as a pair of symmetrical shunt elements 30 or blades.

The corona shield device 20 is provided to cover each of the shunt elements 30 and protect the expansion connector 10 from corona discharge effects that could occur due to the formation of significant potential gradients around and along one or more of the sharp edges 35 of the shunts 30 at high operating voltages.

Each shunt 30 is electrically and mechanically coupled to two different parts of the expansion connector 10, a connector body 40 and a fastening element 50, which are respectively adapted to be connected to different equipments.

The connector body 40 may have an articulated part 42 adapted to be fixed to a terminal of an equipment such as a thyristor valve (not shown) and to allow the direction of the connector body axis Z to be varied with respect to the equipment terminal by a certain angle. The articulated part 42 may be rigidly fixed to the equipment terminal using bolts.

The fastening element 50 is opposed to the connector body 40 and is disposed along the axial direction Z of the connector body 40. The fastening element 50 provides the mechanical and electrical coupling to another equipment or equipment terminal, such as a rigid tubular conductor or busbar 4.

In Fig. 4, the fastening element 50 is formed by a pair of keepers 52 that are adjusted around the cross-section of the tubular conductor 4 within a distance from the end of the tubular conductor 4. The keepers 52 may be fixed to the tube 4 by joining their end parts with one or more bolts 55.

The connector body 40 may further comprise an elongated portion 44 opposed to the articulated part 42 along the axial direction Z. The elongated portion 44 is adapted to pass through the open end of the tubular busbar 4, at least partially, and to slide within the tubular busbar 4 in order to guide the busbar 4 during displacements along the axial direction Z caused by thermal expansions and to maintain the keepers 52 concentrically aligned with the connector body 40. This also improves the mechanic stability of the expansion connector 10 against rotations.

The shunts 30 are arranged on a plane parallel to the connector axis Z and are symmetrically disposed in relation to one another around this axis. Each shunt 30 is electrically coupled to the connector body 40 and the fastening element 50. The shunt blades are bended along a length followed by the transport current when a voltage is applied between the shunt connections 40 and 50, which allow the shunt connections 40 and 50 to move with respect to each other during expansion/contraction of the expansion connector 10.

The length and cross-section of the shunts 30 are determined based on the current and voltage application of the expansion connector 10 and the required flexibility for allowing a desired degree of bending of the shunts 30. Preferably, the shunts 30 are made of an electrical conducting material such as a metal like aluminium or copper. However, any other electrical conducting material suitable for sustaining high voltages across the shunt 30 and having the required flexibility may be used.

The corona shield device 20 is designed so as to surround at least one or more of the sharp edges of the flexible conducting element.

In the embodiment shown in Fig. 4, the expansion corona shield device 20 comprises two symmetric shielding parts 22 adapted to cover the pair of shunts 30 and to offer an external smooth surface of the expansion connector 10.

Each shunt element 30 has an electrical cross-section (in the direction transverse to the transport current) with a substantially rectangular shape that defines four sharp edges along the length of the shunt element 30.

The shielding part 22 is then designed so as to cover at least the sharp edges 35 that run along the outward external surface of the shunt 30 and with a smooth external surface 24 in order to prevent the development of significant potential gradients around these edges 35 during operation at the desired range of voltages.

The dimensions and form of the shielding part 22 depend on the particular form and size of the flexible conducting element of the expansion connector 10.

The inner surface of the shielding part 22 (i.e. the surface facing the shunt 30) is adapted to involve the shunt 30 or at least the outward sharp edges 35 along the transport current path, entirely or at least over a significant portion of the shunt length. This inner surface may be in contact or be brought in contact with the shunt 30 during the expansion/compression of the expansion connector 10. Alternatively, the expansion corona shield 20 may be designed so that direct physical contact between the shielding part 22 and the shunt element 30 is avoided during expansion/compression of the expansion connector 10.

Preferably, the shielding part 22 is formed from a metal sheet or foil having a suitable thickness for providing the desired shielding effect and/or the desired degree of rigidity.

The shielding part 22 is designed so as to have a smooth external surface 24 of a regular shape without sharp edges and with a limited surface roughness. In order to have a full efficiency of the corona shield device 20, the external surface 24 may have an average roughness, also called profile roughness parameter Ra, close to 1.25 µm or below.

In the case of a shunt 30 having a substantially semi-circular shape such as illustrated in Fig. 4, the shielding part 22 may be provided as foil with a concave or curved shape adapted to surround entirely or at least a significant portion of the shunt 30 along the transport current path. Preferably, the shape of the shielding part 22 substantially follows the curvature of the underlying shunt element 30.

As shown in Fig. 4, the curvature of the external surface 24 of the shielding part 22 along the transport current path of the shunt element 30 is characterized by a radius of curvature R1. The radius R1 defines the curvature of the shielding part 22 in a longitudinal plane that is parallel to the axial direction Z of the expansion connector 10, and is selected depending on the size and own curvature of the shunt 30. The length of the shielding part 22 depends on the desired coverage of the shunt 30.

The external surface 24 is also designed with a smooth, curved shape along the width of the shielding part 22 that is on a cross-sectional plane that bisects the shielding part 22 along the radius R1. The width of the shielding part 22 depends on the desired degree of coverage of the shunt cross-section. Preferably, it should be sufficient for substantially covering the outward sharp edges 35 of the shunt 30.

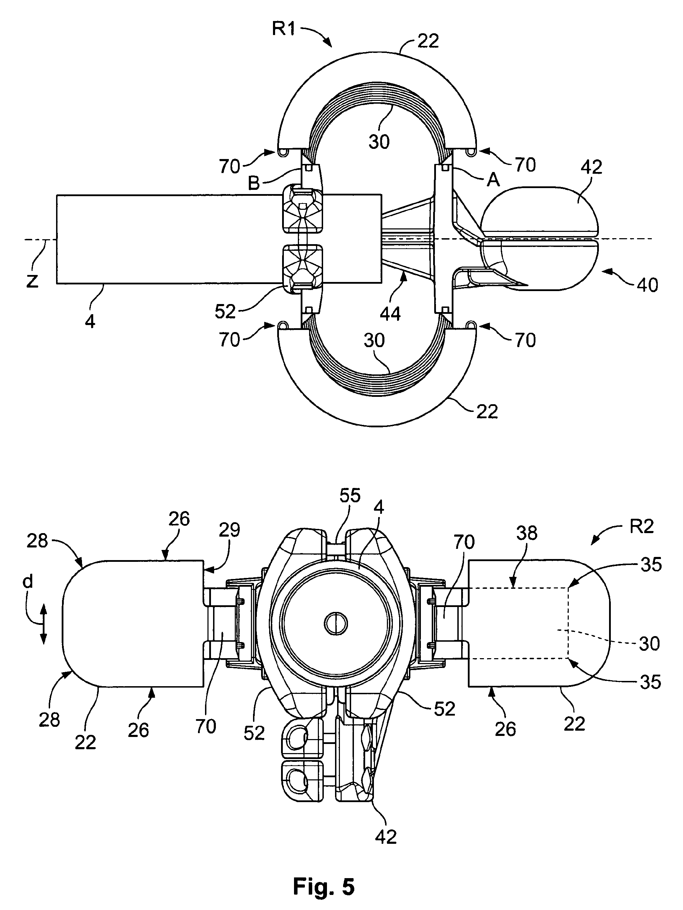

As shown in the lower image of Fig. 5, the external surface 24 of the shielding part 22 has two lateral sides 26 that are substantially parallel to each other and which cover the lateral sides 38 of the shunt 30 (or at least partially). The two lateral sides 26 are joined by two rounded edges 28 which are separated by a certain distance d along the shield width. This distance depends on the dimensions of the shunt cross-section itself.

Each rounded edge 28 is opposed to the respective sharp edge 35 at the outward surface of the shunt 30 and continuously run substantially parallel to the sharp edge 35 along a selected length of the shielding part 22.

The cross-section width, and curvature R2 of the shielding part 22 is selected based on the lateral dimensions of the shunt cross-section, the degree of sharpness of the shunt edges 35, which in the present case is simply defined as the angle formed by the adjacent walls defining the sharp edge, the voltage level of the application as well as design considerations for providing a compact shield.

The radius of curvature R2 of each rounded edge 28 is a critical parameter since they surround the sharpest regions of the shunt element 30. The radius R2 must be selected so as to ensure that the potential gradients formed around the respective sharp edge 35 are maintained below the corona discharge threshold at the desired range of operating voltages.

In Fig. 5, each rounded edge 28 has a similar external radius of curvature R2 since the shunt 30 has a symmetrical shape with sharp edges 35 of similar sharpness. However, an external surface with rounded edges of different curvature may be provided, for instance, for covering a shunt element with an asymmetrical cross-section and/or comprising edges of different sharpness.

The design of the external surface 24 described above allows providing a corona shield device 20 with a compact size that fits around each shunt 30 of the expansion connector 10 without occupying much volume. However, it might be envisaged to provide a shielding part with other shapes of external surface as long as it is smooth enough and substantially covers the shunt edges. For instance, an external surface with a substantially semi-circular curvature along the width of shield, that is, with no rounded edges 28 and parallel lateral sides 26, and wide enough for covering both sharp edges 35 might be provided.

The external radius R1 and/or edge radius R2 are defined in accordance with the voltage level of the particular application, the shape and dimensions of the shunt element 30 itself so as to provide a smooth external surface with a regular shape suitable for reducing the potential gradient around the shunt element 30 to a value below the corona discharge threshold. This means that the required degree of smoothness and/or regularity of the shield increases with the increase of the operation voltage level.

The corona discharge threshold or electric potential gradient limit for inception of the corona discharge depends on several factors. For accessories of High Voltage substations, the gradient limit is typically below 20 kV/cm, more specifically, between 13 and 16 kV/cm. However, the corona discharge threshold may vary based on the roughness of the fittings, the atmospheric pressure, the temperature, the humidity of air.

A corona shield device according to the principles of the present invention may also be conveniently designed for protecting a flat conducting element with sharp edges. In this case, the external surface of the shielding part may be designed with no curvature along the length of the flexible conducting element and with a curved shape along its width for enveloping the sharp edges of the flexible conducting element and protecting them against corona.

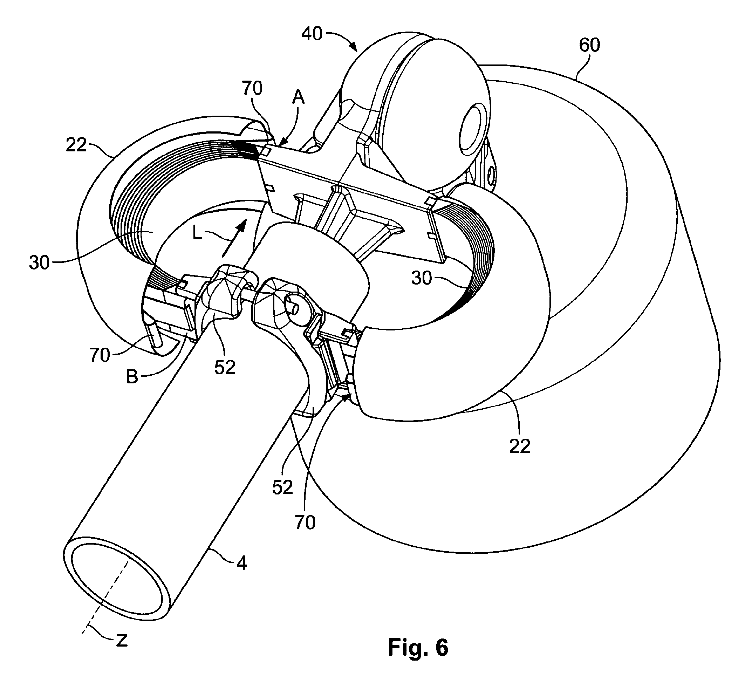

As shown in Fig. 6, the shielding parts 22 of the corona shield device 20 are fixed on different parts of the expansion connector 10, a first attachment point A provided on the connector body (40) and a second attachment point B provided on the fastening element 50.

The shielding part 22 is preferably made of an alloy, such as aluminium alloy, in order to ensure electrical continuity of the electric potential while providing at the same time mechanical rigidity to its component parts. In this case, the shielding part 22 may be fixed to the attachments points A and B by welding, which contributes to increase the effective electrical cross section of the connector for the purpose of carrying current. The shielding part 22 thus provides both mechanical and corona protection to the expansion connector 10.

However, in case the shield 22 would be rigidly attached to the shunt 30, the mechanical rigidity of the shield 22 would not allow it to adapt to the compression/expansion of the shunt 30.

As shown in Fig. 6, the keepers 52 and the connector body 40 are respectively fixed to the tubular busbar 4 and to the equipment terminal 60. Thus, during thermal expansion of the tube 4 by a length L, the keepers 52 rigidly fixed to the tube 4 move along the axial direction Z by a same displacement L while the connector body 40 remains fixed to the equipment terminal 60. As a consequence, the expansion connector 10 is compressed into a compression state. Similarly, in case the busbar length contracts by a given amount due to cooling, the keepers 52 are moved away from the connector body 40 by a similar amount, forcing the expansion connector 10 to extend into a state of expansion.

In order to allow the shielding part 22 to adjust to the expansion/contraction of the expansion connector 10, the corona shield device 20 may be provided with flexible attachment elements for flexibly attaching the shielding part 22 to the expansion connector 10.

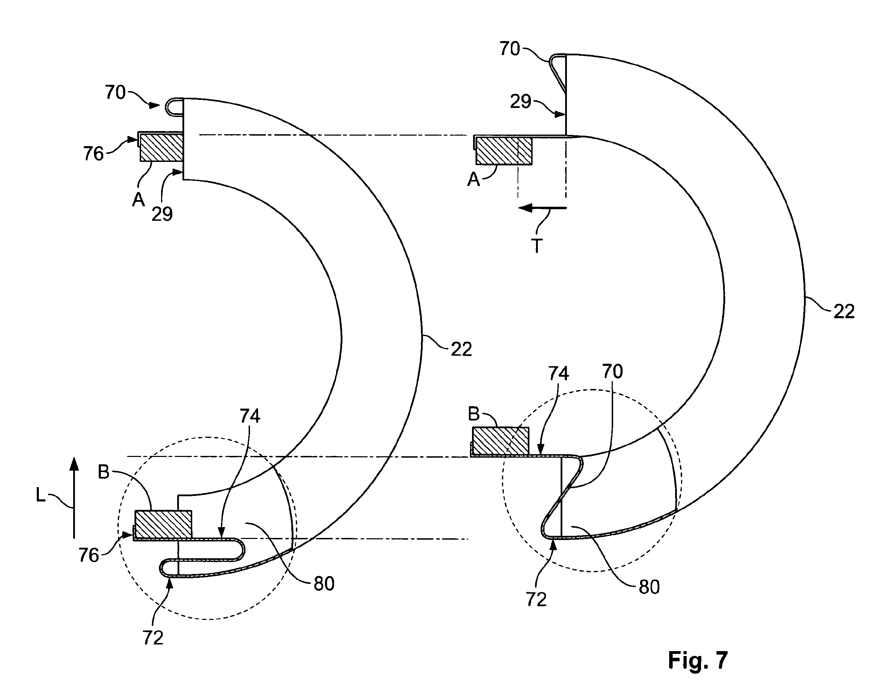

Fig. 7 schematically illustrates an expansion corona shield with flexible attachment elements 70 according to an embodiment of the present invention. For simplicity, the details of the expansion connector shown in Fig. 6 are omitted in Fig. 7.

The image on the left-hand side shows a state of expansion, in which the attachment points A and B are separated by a given distance. The image on the right-hand side illustrates a state of compression in which the attachment points A and B are approached to each other by an amount L.

Each half of the expansion corona shield 20 comprises flexible attachment elements (at least one at each end of the shielding part 22) for attaching the shielding part 22 to the attachment portions A and B which are provided for this purpose on the connector body 40 and the keepers 52, respectively.

The flexible attachment elements may be made of an electrical conducting material, such as a metal, so as to carry current during expansion/compression of the connector 10 too.

The flexible attachment element may be provided by a strap 70 designed with a special Z-shape. The Z-shape is obtained by bending the strap 70 at two different points along its length and in different directions.

A first extremity 72 of the strap 70 is coupled to the external surface 24 of the shielding part 22 and extends from a border 29 of the shielding part 22, preferably, from an intermediate position along the border 29. A second extremity 74 opposed to the first extremity 72 serves as attaching extremity for connecting the strap 70 to attachment portions A or B of the expansion connector 10. The second extremity 74 may be provided with a flange 76 or hook for snatching to a suitable cavity provided in the attachment portions A or B.

The strap 70 is preferably made from the same metal sheet of the shielding part 22 but could also be provided as a separate part that is fixed to the border 29.

The two extremities of the strap 70 are preferably substantially flat and parallel to each other. The Z-shape provides elastic properties to the strap 70 in the direction perpendicular to the flat extremities 72, 74 and allows the strap 70 to compress or expand in this direction when a force is applied to any of the extremities.

As schematically represented in Fig. 7, a first strap 70 is provided for fixing the shielding part 22 to attachment portion A, which is provided on the connector body 40 and, therefore, represents a fixed attachment point of the shielding part 22 during expansion/contraction of the expansion connector 10 when the connector body 40 is coupled to the equipment terminal 60.

A second strap 70 is fixed to attachment portion B, which is provided on the movable keeper 52 and therefore, represents a movable, attachment point of the shielding part 22.

In an initial state where the thermal expansion effects of the busbar 4 are negligible, both straps 70 are substantially bended so that the attaching extremity 74 and the respective attachments points A (or B) are approximately at an intermediate distance from the top (or bottom) of the border 29 of the shielding part 22. In this configuration, the shielding part 22 substantially covers the shunt 30 (not shown) and is disposed in a symmetrical manner around the shunt 30.

However, if the busbar 4 expands by an amplitude L due to heating, the attachment portion B follows the tube expansion by the same amplitude and approaches the fixed attachment portion A. The attaching extremity 74 is also forced to move, causing the Z-shape of the strap 70 to extend or stretch in the displacement direction by a given amplitude.

Since the shielding part 22 is not rigidly connected to a fixed point, the stretch of the strap 70 causes the shielding part 22 to be displaced in the same direction although by a different amount that depends on the amplitude L and the flexibility of strap 70.

At the same time, since the attachment portion A cannot move, the displacement of the shielding part 22 causes the strap 70 at the opposed side of the shield 22 to stretch with respect to the fixed attachment portion A, increasing the distance between the first and second extremities parts 72, 74 by a given amount that depends on the flexibility of the strap 70. Thus, the shielding part 22 can be freely moved in the longitudinal direction Z.

Similarly, if the busbar 4 contracts by an amount L due to cooling, the attachment portion B follows the contraction of the busbar, increasing its distance from the fixed attachment portion A by the same amount.

In the present example, the pair of straps 70 has similar elastic properties. Therefore, they are stretched or compressed by substantially a same amount L/2 when the distance between attachment points A and B decreases or increases, respectively, by an amount L. However, in case the straps 70 have different resilience, the stretching amplitude of each strap may be different.

The compression of the shunt 30 in the longitudinal direction also results in the shape of the shunt 30 being elongated in the direction transverse to the longitudinal displacement L. If the elongation is too important and/or the shielding part 22 is provided very close to shunt, the elongation may be blocked by the shielding part 22 or damage it.

In order to prevent this situation, the flexible attachment elements may be designed so as to allow a relative displacement of the shielding part 22 in the direction transverse to the longitudinal displacement of points A and B.

As shown in the partial cut-away view in Fig. 7, when the strap 70 is compressed and expanded in the longitudinal direction L, the special Z-shape results in the attaching extremity 74 retracting to and expanding from the hollow space 80 surrounded by the border 29 of the shielding part 22, respectively.

Thus, as shown in Fig. 7, when the attachment portions A and B approach to each other by an amount L, the attaching extremities 74 expand from the border 29 by a certain amount T in the direction transverse to the longitudinal displacement L. This causes the shielding part 22 to move away from attachment portions A and B by the same amount in the opposite direction, and consequently, away from the connected shunt 30.

If the distance between the attachment portions A and B is again increased due to thermal contraction of the busbar 4, for instance, by returning to the expansion state illustrated in the left-hand side of Fig. 7, the Z-shape of each strap 70 is compressed and each attaching extremity 74 partially retracts into the hollow space 80 with respect to the shield border 29. As a consequence, the shield 22 approaches again the attachment portions A and B in the transverse direction and therefore, the shunt 30 which meanwhile has also returned to its initial shape.

Consequently, the special Z-shape of the straps 70 allow the shielding part 22 to follow both the longitudinal displacement of attachment portion B and the elongation of the shunt 30 in the transverse direction. At the same time, the strap 70 provides sufficient rigidity for maintaining the shielding part 22 aligned with the shunt 30.

The size of the strap 70 may be selected so as to allow the shield 22 to fully follow the maximum amplitude of expansion/contraction of the connector 10 under operating conditions.

The length of the attaching extremity 74 may be also selected so as to a reserve a minimum distance between the border 29 of the shielding part 22 and the attachment portions A (or B) at all times. The maximum elongation of the shunt 30 expected during expansion/contraction of the connector may also be taken into account.

The present invention thus make possible to provide a corona shield device that can adjust to the effects of expansion of the connector 10 in two orthogonal directions while providing corona protection at all timers.

Although the present embodiment has been described with reference to the attachment portion A being fixed, those skilled in the art will immediately realize that the working principle of the expansion corona shield according to the present invention depends on the displacement of the attachment portions A and B with respect to each other, irrespective from which attachment portion A or B of the connector is fixed or moved. For instance, the expansion corona shield described above may be also applied to expansion connectors in which both attachment portions A and B are movable such as expansions connectors adapted to interconnect two rigid busbars.

In addition, it may be envisaged to provide an expansion corona shield device in which the shielding part is fixed by a pair of straps of different elasticity. In another modification, the shielding part may be provided with only one flexible attachment element 70, for instance at the side of the shielding part to be attached to the movable part of the expansion connector, while the opposed side of the shielding part is rigidly attached to the fixed part of the expansion connector.

Further, although the above embodiments were described in view of the application of the expansion corona shield to protect expansion connectors of blade design and intended for high voltage applications, other applications of the expansion corona shield may be readily envisaged by a person skilled in the art.

In particular, the expansion corona shield of the invention may be conveniently used in applications where high currents are transported by conductors with irregular edges, irrespective from the conductors being flexible or not.

**List of reference signs**

| Reference sign | Description |
|---|---|
| | Expansion connector of blade-type |
| 1 | Connection terminal |
| 2 | Blade or shunt |
| 4 | Rigid tubular conductor, busbar |
| | Expansion connector of cable-type |
| 5 | Connection terminal |
| 6 | Flexible cable Expansion connector of blade-type with corona ring |
| 7 | Blade |
| 8 | Connection terminal |
| 9 | Corona ring |
| 10 | Expansion connector device |
| 20 | Corona shield device |
| 22 | Shielding part |
| 24 | External surface |
| 26 | Lateral side |
| 28 | Rounded edge of external surface |
| d | Distance between rounded edges |
| 29 | End border of shielding part |
| 30 | flexible conducting element, shunt elements, blades |
| 35 | Sharp edges |
| 38 | Lateral side of shunt |
| 40 | connector body |
| 42 | articulated part |
| 44 | elongated portion |
| 50 | fastening element, |
| 52 | keepers |
| 55 | bolt |
| 60 | Equipment terminal |
| 70 | Flexible attachment element, strap |
| 72 | First extremity extending from border |
| 74 | Second extremity for attaching to connector, attaching extremity |
| 76 | flange |
| 80 | Hollow space surround by the end border |
| L | Longitudinal direction |
| T | Transverse direction |
| z | Axial direction of expansion connector |
| A | Fixed attachment point |
| B | Movable attachment point |

## Claims

1. An expansion connector for high voltage applications, comprising:
a curved flexible conducting element (30) with a sharp edge (35) along a transport current path of the flexible conducting element (30); and
a corona shield device comprising a shielding part (22) adapted to cover the flexible conducting element (30);
wherein the shielding part (22) has a smooth external surface (24) of a regular shape without sharp edges adapted to decrease an electric potential gradient around the flexible conducting element (30);
**characterized in that**
the shape of the shielding part (22) is adapted to substantially follow the curvature of the underlying flexible conducting element (30) along the transport current path.

2. The expansion connector of claim 1, wherein the shielding part (22) is adapted to decrease the electric potential gradient around the flexible conducting element (30) to a value that is below a corona discharge threshold, wherein the corona discharge threshold is below 20 kV/cm.

3. The expansion connector of claim 1 or claim 2, wherein the external surface (24) has an average roughness Rₐ of substantially 1.25 µm or less.

4. The expansion connector of any one of claims 1 to 3, wherein the shielding part (22) is adapted to surround at least a part of the flexible conducting element (30).

5. The expansion connector of any one of claims 1 to 4, wherein
the shielding part (22) has an inner surface adapted to cover said sharp edge (35), said external surface (24) having a rounded edge (28) opposed to said sharp edge (35).

6. The expansion connector (10) of claim 5, wherein said rounded edge (28) has a radius of curvature (R2) that is selected based on a degree of sharpness of the sharp edge (35) and/or an intended operating voltage so as to reduce the electric potential gradient formed around the sharp edge (35) under operating voltage conditions.

7. The expansion connector (10) of any one of claims 1 to 6, wherein
the flexible conducting element (30) is a shunt element that is bended along the transport current path, and
the shielding part (22) has a concave form with an external radius of curvature (R1) that is adapted to cover the sharp edge (35) along said transport current path.

8. The expansion connector of any one of claims 1 to 7, further comprising:
a flexible attachment element (70) adapted to flexibly attach the shielding part (22) to an attachment point (A or B) of the expansion connector.

9. The expansion connector of claim 8, wherein the flexible attachment element (70) is adapted to contract or expand along a longitudinal direction (L) so as to allow the shielding part (22) to move with respect to the attachment point (A or B) along said direction (L).

10. The expansion connector of claim 8 or claim 9, wherein the flexible attachment element (70) is provided at a free border (29) of the shielding part (22) and has an attaching extremity (74) adapted to be fixed to said attachment point (A or B) of the expansion connector.

11. The expansion connector of claim 10, wherein the attaching extremity is adapted to extract from or retract to with respect to the free border (29) along a transverse direction (T) so as to allow the shielding part (22) to move with respect to the attachment point (A or B) along said direction.

12. The expansion connector of any one of claims 8 to 11, wherein the flexible attachment element (70) is adapted to conduct electrical current from the shielding part (22) to the attachment point (A or B).

13. The expansion connector device of any one of claims 1 to 12, comprising:
a first connection part (40) adapted to connect to a first element (60);
a second connection part (50) adapted to connect to a second element (4) that is movable with respect to the first element (60);
a flexible conducting element (30) adapted to flexibly couple the first and second connection parts (40, 50) along an axial direction (Z).

14. The expansion connector device of claim 13, wherein the shielding part (22) is flexibly attached to respective attachment points (A, B) of the first and second connection parts (40, 50) by at least one flexible attachment element (70).

15. The expansion connector device of claim 14, wherein a first flexible attachment element (70) is attached to a fixed attachment point (A) provided on the connector body (40) and a second flexible attachment element (70) is attached to a movable attachment point (B) provided on the second connection part (52), which is movable with respect to the connector body (40).

## Patentansprüche

1. Dehnverbinder für Hochspannungs-Einsatzzwecke, der umfasst:
ein gekrümmtes flexibles Leitungselement (30) mit einer scharfen Kante (35) an einem Transportstromweg des flexiblen Leitungselementes (30); und
eine Korona-Abschirmungsvorrichtung, die einen Abschirmteil (22) umfasst, der so eingerichtet ist, dass er das flexible Leitungselement (30) abdeckt;
wobei der Abschirmteil (22) eine glatte Außenfläche (24) einer regelmäßigen Form ohne scharfe Kanten hat, die so eingerichtet ist, dass ein Gradient des elektrischen Potentials um das flexible Leitungselement (30) herum verringert wird;
**dadurch gekennzeichnet, dass**
die Form des Abschirmteils (22) so eingerichtet ist, dass sie im Wesentlichen der Krümmung des darunterliegenden flexiblen Leitungselementes (30) den Transportstromweg entlang folgt.

2. Dehnverbinder nach Anspruch 1, wobei der Abschirmteil (22) so eingerichtet ist, dass der Gradient des elektrischen Potentials um das flexible Leitungselement (30) herum auf einen Wert verringert wird, der unterhalb eines Koronaentladungs-Schwellenwertes liegt, wobei der Koronaentladungs-Schwellenwert unterhalb von 20 kV/cm liegt.

3. Dehnverbinder nach Anspruch 1 oder 2, wobei die Außenfläche (24) eine mittlere Rauigkeit Rₐ von im Wesentlichen 1,25 µm oder weniger hat.

4. Dehnverbinder nach einem der Ansprüche 1 bis 3, wobei der Abschirmteil (22) so eingerichtet ist, dass er wenigstens einen Teil des flexiblen Leitungselementes (30) umschließt.

5. Dehnverbinder nach einem der Ansprüche 1 bis 4, wobei
der Abschirmteil (22) eine Innenfläche hat, die so eingerichtet ist, dass sie die scharfe Kante (35) abdeckt, und die Außenfläche (24) eine abgerundete Kante (28) hat, die der scharfen Kante (35) gegenüberliegt.

6. Dehnverbinder (10) nach Anspruch 5, wobei die abgerundete Kante (28) einen Krümmungsradius (R2) hat, der auf Basis eines Grades der Schärfe der scharfen Kante (35) und/oder einer vorgesehenen Betriebsspannung ausgewählt wird, um den Gradienten des elektrischen Potentials zu verringern, der unter Betriebsspannungs-Bedingungen um die scharfe Kante (35) herum erzeugt wird.

7. Dehnverbinder (10) nach einem der Ansprüche 1 bis 6, wobei
das flexible Leitungselement (30) ein Shunt-Element ist, das den Transportstromweg entlang gebogen ist, und
der Abschirmteil (22) eine konkave Form mit einem äußeren Krümmungsradius (R1) hat, die so eingerichtet ist, dass die scharfe Kante (35) den Transportstromweg entlang abgedeckt wird.

8. Dehnverbinder nach einem der Ansprüche 1 bis 7, der des Weiteren umfasst:
ein flexibles Anbringungselement (70), das so eingerichtet ist, dass der Abschirmteil (22) an einem Anbringungspunkt (A oder B) des Dehnverbinders flexibel angebracht ist.

9. Dehnverbinder nach Anspruch 8, wobei das flexible Anbringungselement (70) so eingerichtet ist, dass es sich in einer Längsrichtung (L) so zusammenzieht oder ausdehnt, dass sich der Abschirmteil (22) in Bezug auf den Anbringungspunkt (A oder B) in der Richtung (L) bewegen kann.

10. Dehnverbinder nach Anspruch 8 oder Anspruch 9, wobei sich das flexible Anbringungselement (70) an einem freien Abschluss (29) des Abschirmteils (22) befindet und ein äußeres Anbringungsende (74) aufweist, das zum Befestigen an dem Anbringungspunkt (A oder B) des Dehnverbinders eingerichtet ist.

11. Dehnverbinder nach Anspruch 10, wobei das äußere Anbringungsende so eingerichtet ist, dass es in einer Querrichtung (T) in Bezug auf den freien Abschluss (29) herausgezogen oder eingezogen wird, so dass sich der Abschirmteil (22) in Bezug auf den Anbringungspunkt (A oder B) in der Richtung bewegen kann.

12. Dehnverbinder nach einem der Ansprüche 8 bis 11, wobei das flexible Anbringungselement (70) so eingerichtet ist, dass es elektrischen Strom von dem Abschirmteil (22) zu dem Anbringungspunkt (A oder B) leitet.

13. Dehnverbindervorrichtung nach einem der Ansprüche 1 bis 12, die umfasst:
einen ersten Verbindungsteil (40), der zum Verbinden mit einem ersten Element (60) eingerichtet ist;
einen zweiten Verbindungsteil (50), der zum Verbinden mit einem zweiten Element (4) eingerichtet ist, das in Bezug auf das erste Element (60) bewegt werden kann;
ein flexibles Leitungselement (30), das so eingerichtet ist, dass es den ersten und den zweiten Verbindungsteil (40, 50) in einer axialen Richtung (Z) flexibel koppelt.

14. Dehnverbindervorrichtung nach Anspruch 13, wobei der Abschirmteil (22) mit wenigstens einem flexiblen Anbringungselement (70) flexibel an entsprechenden Anbringungspunkten (A, B) des ersten und des zweiten Verbindungsteils (40, 50) angebracht ist.

15. Dehnverbindervorrichtung nach Anspruch 14, wobei ein erstes flexibles Anbringungselement (70) an einem festen Anbringungspunkt (A) angebracht ist, der sich an dem Verbinder-Körper (40) befindet, und ein zweites flexibles Anbringungselement (70) an einem beweglichen Anbringungspunkt (B) angebracht ist, der sich an dem zweiten Verbindungsteil (50) befindet und in Bezug auf den Verbinder-Körper (40) bewegt werden kann.

## Revendications

1. Connecteur d'extension pour des applications à haute tension, comprenant :
un élément conducteur flexible courbe (30) avec un bord effilé (35) le long d'un chemin de transport du courant de l'élément conducteur flexible (30) ; et
un dispositif de blindage anti-corona comportant une partie de blindage (22) apte à couvrir l'élément conducteur flexible (30) ;
où la partie de blindage (22) comporte une surface extérieure lisse (24) de forme régulière sans bords effilés apte à réduire un gradient de potentiel électrique autour de l'élément conducteur flexible (30) ;
**caractérisé en ce que**
la forme de la partie de blindage (22) est adaptée pour suivre sensiblement la courbure de l'élément conducteur flexible sous-jacent (30) le long du chemin de transport de courant.

2. Connecteur d'extension selon la revendication 1, où la partie de blindage (22) est apte à réduire le gradient de potentiel électrique autour de l'élément conducteur flexible (30) à une valeur inférieure au seuil de décharge de corona, où le seuil de décharge de corona est inférieur à 20 kV/cm.

3. Connecteur d'extension selon la revendication 1 ou la revendication 2, où la surface extérieure (24) comporte une rugosité moyenne Rₐ substantiellement égale à 1,25 µm ou moins.

4. Connecteur d'extension selon l'une quelconque des revendications 1 à 3, où la partie de blindage (22) est adaptée pour entourer au moins une partie de l'élément conducteur flexible (30).

5. Connecteur d'extension selon l'une quelconque des revendications 1 à 4, où
la partie de blindage (22) comporte une surface intérieure adaptée pour couvrir ledit bord effilé (35), ladite surface extérieure (24) comportant un bord arrondi (28) faisant face audit bord effilé (35).

6. Connecteur d'extension (10) selon la revendication 5, où ledit bord arrondi (28) comporte un rayon de courbure (R2) choisi sur la base d'un degré d'effilement du bord effilé (35) et/ou d'une tension de fonctionnement voulue, de manière à réduire le gradient de potentiel électrique formé autour du bord effilé (35) par la tension de fonctionnement.

7. Connecteur d'extension (10) selon l'une quelconque des revendications 1 à 6, où
l'élément conducteur flexible (30) est un élément shunt recourbé le long du chemin de transport de courant, et
la partie de blindage (22) présente une forme concave avec un rayon de courbure extérieur (R1) adapté pour couvrir le bord effilé (35) le long dudit chemin de transport de courant.

8. Connecteur d'extension selon l'une quelconque des revendications 1 à 7, comportant en outre :
un élément de fixation flexible (70) adapté pour fixer de manière flexible la partie de blindage (22) à un point d'attache (A ou B) du connecteur d'extension.

9. Connecteur d'extension selon la revendication 8, où l'élément de fixation flexible (70) est apte à se contracter ou s'étendre le long d'une direction longitudinale (L) de manière à permettre à la partie de blindage (22) de se déplacer par rapport au point de fixation (A ou B) le long de ladite direction (L).

10. Connecteur d'extension selon la revendication 8 ou la revendication 9, où l'élément de fixation flexible (70) est prévu au niveau d'une bordure libre (29) de la partie de blindage (22) et comporte une extrémité de fixation (74) adaptée pour être fixée audit point de fixation (A ou B) du connecteur d'extension.

11. Connecteur d'extension selon la revendication 10, où l'extrémité de fixation est adaptée pour s'extraire ou se rétracter par rapport à la bordure libre (29) dans une direction transversale (T) de manière à permettre à la partie de blindage (22) de se déplacer par rapport au point de fixation (A ou B) dans ladite direction.

12. Connecteur d'extension selon l'une quelconque des revendications 8 à 11, où l'élément de fixation flexible (70) est adapté pour conduire un courant électrique de la partie de blindage (22) au point de fixation (A ou B).

13. Connecteur d'extension selon l'une quelconque des revendications 1 à 12, comportant :
une première partie de connexion (40) apte à être connectée à un premier élément (60) ;
une seconde partie de connexion (50) apte à être connectée à un second élément (4) déplaçable par rapport au premier élément (60) ;
un élément conducteur flexible (30) apte à coupler de manière flexible les première et seconde parties de connexion (40, 50) le long d'une direction axiale (Z).

14. Connecteur d'extension selon la revendication 13, où la partie de blindage (22) est fixée de manière flexible à des points d'attachement respectifs (A, B) des première et seconde parties de connexion (40, 50) par au moins un élément de fixation flexible (70).

15. Connecteur d'extension selon la revendication 14, où un premier élément de fixation flexible (70) est fixé à un point de fixation fixe (A) prévu sur le corps du connecteur (40) et un second élément de fixation flexible (70) est fixé à un point de fixation déplaçable (B) prévu sur la seconde partie de connexion (52) qui est déplaçable par rapport au corps de connecteur (40).
